(19) **Europäisches Patentamt**
**European Patent Office**
**Office européen des brevets**

(11) **EP 3 578 600 A1**

(12) **EUROPEAN PATENT APPLICATION**
published in accordance with Art. 153(4) EPC

(43) Date of publication:
**11.12.2019 Bulletin 2019/50**

(51) Int Cl.:
*C08L 11/02* [(2006.01)]  *C08K 5/16* [(2006.01)]
*C08L 29/04* [(2006.01)]  *C09J 11/08* [(2006.01)]
*C09J 111/02* [(2006.01)]  *C09J 129/04* [(2006.01)]
*C09J 175/04* [(2006.01)]

(21) Application number: **18747828.4**

(22) Date of filing: **30.01.2018**

(86) International application number:
**PCT/JP2018/002870**

(87) International publication number:
**WO 2018/143159 (09.08.2018 Gazette 2018/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **01.02.2017 JP 2017017087**
**14.11.2017 JP 2017219203**

(71) Applicant: **Denka Company Limited**
**Tokyo 103-8338 (JP)**

(72) Inventors:
• **KIYOFUJI, Gaito**
**Itoigawa-city**
**Niigata 949-0393 (JP)**
• **KOBAYASHI, Naoki**
**Itoigawa-city**
**Niigata 949-0393 (JP)**
• **HAGIWARA, Shogo**
**Itoigawa-city**
**Niigata 949-0393 (JP)**

(74) Representative: **Godemeyer Blum Lenze**
**Patentanwälte**
**Partnerschaft mbB - werkpatent**
**An den Gärten 7**
**51491 Overath (DE)**

(54) **CHLOROPRENE-BASED POLYMER LATEX COMPOSITION, MIXED LATEX COMPOSITION USING SAME, AND USE THEREOF**

(57)    Provided is a chloroprene polymer latex composition usable in a mixed latex composition having satisfactory bond strength for a hard adherend such as concrete and mortar. A chloroprene polymer latex composition comprises 20.5 to 100 parts by mass of a surfactant component, relative to 100 parts by mass of a chloroprene polymer.

EP 3 578 600 A1

**Description**

Technical Field

The present invention relates to a chloroprene polymer latex composition; a mixed latex composition comprising the composition; an adhesive composition, a repairing/reinforcing material for civil engineering and construction, a water cutoff material, a falling prevention material, and a surface covering material comprising the mixed latex composition; a cured product of the mixed latex composition; and a repairing/reinforcing method for civil engineering and construction using the mixed latex composition.

Background Art

Adhesives mainly containing a chloroprene polymer are typically a solvent-based adhesive that is dissolved in an organic solvent such as toluene, hexane, ethyl acetate, methyl ethyl ketone, and cyclohexane and thus may cause, for example, environmental pollution problems. To address such a problem, what is called a water-based adhesive eliminating the use of organic solvents has been aggressively developed.

The conventional water-based adhesive unfortunately has a lower bond strength than the solvent-based adhesive.

As a technique of improving the above bond strength, a two-pack adhesive has been studied. For example, a known adhesive composition comprises two separate liquids of a main agent containing a particular chloroprene polymer latex, an acrylic or SBR latex, and an anionic surfactant in particular amounts and a curing agent containing a polyvalent metal salt (see Patent Documents 1 and 2). Such an adhesives exhibits sufficient bond strength to a soft and water-absorbable adherend such as polyurethane foams.

The adhesives according to Patent Documents 1 and 2, however, give insufficient bond strength to a hard adherend such as concrete and mortar. In addition, the latex in the main agent has insufficient stability, and aggregations are generated when the main agent and the curing agent are previously mixed. Hence, the adhesives have other problems in practical use, including limited use as a two-pack type.

Citation List

Patent Documents

Patent Document 1: JP-ANo. 56-59874
Patent Document 2: JP-ANo. H09-188860

Summary of the Invention

Technical Problem

The present invention has a main object to provide a chloroprene polymer latex composition capable of giving a mixed latex composition having satisfactory bond strength to a hard adherend such as concrete and mortar.

Solution to Problem

A chloroprene polymer latex composition pertaining to the present invention comprises 20.5 to 100 parts by mass of a surfactant component in terms of solid content, relative to 100 parts by mass of a chloroprene polymer.

In the chloroprene polymer latex composition pertaining to the present invention, the surfactant component may comprise a nonionic emulsifier at a concentration of 20 to 100% by mass in terms of solid content.

In the chloroprene polymer latex composition pertaining to the present invention, the nonionic emulsifier may be a polyvinyl alcohol having a saponification degree of 70.0 to 96.5% by mole.

An adhesive composition, a repairing/reinforcing material for civil engineering and construction, a water cutoff material, a falling prevention material, and a surface covering material pertaining to the present invention comprise a mixed latex composition containing the above chloroprene polymer latex composition and a curing agent composition having an isocyanate group as a functional group.

A cured product pertaining to the present invention is prepared by applying/injecting and curing the above mixed latex composition.

The present invention further provides a repairing/reinforcing method for civil engineering and construction, such as a water cutoff method, a falling prevention method, and a surface covering method, and the method comprises a step of applying, injecting, or spraying the mixed latex composition pertaining to the present invention (in)to an adherend, and

a step of curing the mixed latex composition.

Advantageous Effects of Invention

The chloroprene polymer latex composition according to the present invention comprises a particular amount of a surfactant, thus the stability of the latex does not deteriorate, and the latex is capable of being subjected to curing. A mixed latex composition comprising the chloroprene polymer latex pertaining to the present invention exhibits satisfactory bond strength to a hard adherend such as concrete, mortar, wood, glass, ceramic, metals including iron, zinc, and copper, and plastics including polypropylene and polyethylene.

Description of Embodiments

Preferred embodiments for carrying out the present invention will now be described. The following embodiments are merely examples of representative embodiments of the present invention and are not intended to limit the scope of the invention.

1. Chloroprene polymer latex composition (first embodiment)

First, a chloroprene polymer latex composition pertaining to a first embodiment of the present invention (hereinafter simply called "chloroprene latex") will be described. The chloroprene latex of the embodiment comprises a particular amount of a surfactant relative to a chloroprene polymer. The chloroprene latex of the embodiment may comprise a tackifier resin, a pH adjuster, a metal oxide, a plasticizer, an age inhibitor, a thickener, a reducing agent, a defoaming agent, a filler, and the like.

(1) Chloroprene polymer

The chloroprene polymer contained in the chloroprene latex of the embodiment is a homopolymer of 2-chloro-1,3-butadiene (hereinafter abbreviated as "chloroprene") or a copolymer prepared by copolymerization of chloroprene and at least one monomer copolymerizable with chloroprene.

Examples of the monomer copolymerizable chloroprene in the embodiment include 2,3-dichloro-1,3-butadiene, 1-chloro-1,3-butadiene, butadiene, isoprene, styrene, acrylonitrile, acrylic acid and esters thereof, and methacrylic acid and esters thereof, and two or more of these monomers may be used as needed.

The chloroprene polymer is roughly classified according to polymerization method into a sulfur-modified chloroprene polymer and a non-sulfur-modified chloroprene polymer, and the non-sulfur-modified polymer is further classified according to the type of a molecular weight modifier into a mercaptan-modified chloroprene polymer and a xanthogen-modified chloroprene polymer. The sulfur-modified chloroprene polymer is prepared by copolymerization of a material monomer mainly containing chloroprene with sulfur, subsequent plasticization of the resulting copolymer with thiuram disulfide, and adjustment to an intended Mooney viscosity.

The mercaptan-modified chloroprene polymer is prepared by using, as the molecular weight modifier, an alkyl mercaptan such as n-dodecyl mercaptan, tert-dodecyl mercaptan, and octyl mercaptan. The xanthogen-modified chloroprene polymer is prepared by using, as the molecular weight modifier, an alkyl xanthogen compound. The chloroprene polymer in the chloroprene latex of the embodiment may be any of the above various chloroprene polymers.

The chloroprene polymer may also be classified according to the crystallization speed into, for example, a type having a low crystallization speed, a type having a moderate crystallization speed, and a type having a high crystallization speed. The chloroprene latex of the embodiment may comprise any of the above types of chloroprene polymers, and the type may be appropriately selected depending on intended applications.

The method of producing the chloroprene polymer is not specifically limited. Material monomers may be polymerized by a common emulsion polymerization method in the presence of a surfactant, a polymerization initiator, a molecular weight modifier, and the like.

The polymerization initiator used may be, for example, a known polymerization initiator commonly used for emulsion polymerization of chloroprene, including organic peroxides such as potassium persulfate, ammonium persulfate, sodium persulfate, hydrogen peroxide, and tert-butyl hydroperoxide.

The polymerization temperature during the emulsion polymerization is not limited to particular values, and is preferably 0 to 50°C and more preferably 20 to 50°C from the viewpoint of productivity and polymerization stability. The final conversion ratio of monomers is also not limited to particular values, and is preferably 60 to 100% from the viewpoint of productivity.

When the final conversion ratio reaches a predetermined range, a small amount of a polymerization inhibitor is added to the polymerization liquid to stop the polymerization reaction, giving the chloroprene latex.

The polymerization inhibitor used may be, for example, a commonly used polymerization inhibitor such as thiodiphenylamine, 4-tert-butylcatechol, and 2,2-methylenebis-4-methyl-6-tert-butylphenol.

The chloroprene latex after polymerization reaction may be subjected to, for example, steam stripping to remove unreacted monomers, and the pH of the latex may be adjusted.

The chloroprene latex in the embodiment is not specifically limited, but the chloroprene (co)polymer preferably has a toluene insoluble content of 20 to 99%.

(2) Surfactant

The chloroprene latex of the embodiment comprises, relative to 100 parts by mass of the chloroprene polymer, a surfactant in a range of 20.5 to 100 parts by mass in terms of solid content, particularly preferably in a range of 25 to 95 parts by mass. If containing less than 20.5 parts by mass of the surfactant, the latex may cause aggregation/rubber precipitation immediately after mixing with the curing agent composition having an isocyanate group as a functional group described later (hereinafter called "isocyanate compound") and may fail to give a uniform cured product or give insufficient bond strength between a resulting cured product and a hard adherend such as concrete and mortar. If containing 100 parts by mass or more of the surfactant, the latex may have excess viscosity and cause trouble in formulation, coating, or other steps.

The chloroprene latex of the embodiment comprises the surfactant used for production of the chloroprene polymer by emulsion polymerization, but an additional surfactant may be added to the chloroprene latex after polymerization. In other words, the amount of the surfactant contained in the chloroprene latex may be appropriately adjusted.

In the description, the surfactant means an emulsifier that forms micelles (surfactant assemblies) in an aqueous medium. The surfactant used in the embodiment is not specifically limited, and a known surfactant may be used. Examples of the surfactant include anionic emulsifiers such as salts of rosin acid, salts of fatty acids, alkyl sulfonate salts including sodium alkylbenzene sulfonates, and alkyl sulfate ester salts including sodium lauryl sulfate; nonionic emulsifiers such as polyoxyethylene alkyl ethers, cellulose derivatives, polyoxyethylene alkylaryl ethers, polyoxyethylene styryl phenyl ether, polyoxyalkyl phenyl ethers, polyoxyalkylene alkyl ethers, polyoxyethylene-acetylene glycol ether, polyoxyethylene sorbitan fatty acid ester, higher fatty acid alkanol amides, and polyvinyl alcohol; and cationic emulsifiers such as alkylamine salts and quaternary ammonium salts.

[Nonionic emulsifier]

In the chloroprene latex of the embodiment, the concentration of the nonionic emulsifier in the surfactant may be 20 to 100% by mass in terms of solid content, as needed. This enables production of a stable chloroprene latex, and the latex contributes to stable curing when mixed with the isocyanate compound described later. Consequently, the cured product exhibits satisfactory bond strength to a hard adherend such as concrete and mortar. When the surfactant comprises the nonionic emulsifier at a concentration of 20% by mass or more, the chloroprene latex has higher stability. This eliminates the necessity of suppressing the amount of the isocyanate compound described later, and the resulting cured product exhibits higher bond strength to a hard adherend such as concrete and mortar.

Examples of the nonionic emulsifier include polyvinyl alcohol (hereinafter called PVA) and copolymers thereof (for example, a copolymer with acrylamide), polyvinyl ether and copolymers thereof (for example, a copolymer with maleic acid), polyvinylpyrrolidone and copolymers thereof (for example, a copolymer with vinyl acetate), chemically modified products of these (co)polymers, cellulose derivatives (hydroxyethyl cellulose), polyoxyethylene alkyl ethers, polyoxyethylene alkylaryl ethers, polyoxyethylene styryl phenyl ether, polyoxyethylene alkyl phenyl ethers, polyoxyalkylene alkyl ethers, polyoxyethylene-acetylene glycol ether, and sorbitan fatty acid esters.

[Polyvinyl alcohol]

In the chloroprene latex of the embodiment, a part or all of the nonionic emulsifier may be a polyvinyl alcohol.

The polyvinyl alcohol may be any type, but a polyvinyl alcohol having a saponification degree of 70.0 to 96.5% by mole is preferably contained from the viewpoint of further improving the stability of the chloroprene latex. By using a polyvinyl alcohol having a saponification degree of 70.0% by mole or more and 96.5% by mole or less, the stability of the chloroprene latex may be further improved. This eliminates the necessity of suppressing the amount of the isocyanate compound described later, and the resulting mixed latex composition may give much higher bond strength to a hard adherend such as concrete and mortar.

The polyvinyl alcohol may have any polymerization degree, but a polyvinyl alcohol having a polymerization degree of 200 to 4,500 is preferably contained from the viewpoint of further improving the stability of the polymer latex composition. Use of a polyvinyl alcohol having a polymerization degree of 200 to 4,500 eliminates the limitation of the isocyanate compound described later, and the resulting mixed latex composition may give higher bond strength to a hard adherend such as concrete and mortar.

In the description, the polyvinyl alcohol means a polymer prepared by saponifying a homopolymer of a vinyl ester monomer or a copolymer of a vinyl ester monomer with a monomer copolymerizable therewith.

Examples of the vinyl ester monomer include, but are not necessarily limited to, vinyl formate, vinyl acetate, vinyl propionate, vinyl valerate, vinyl caprate, vinyl laurate, vinyl stearate, vinyl benzoate, vinyl pivalate, and vinyl versatate. Of them, vinyl acetate, which has excellent stability during polymerization, is particularly preferably used.

When a polyvinyl alcohol is produced, an additional monomer copolymerizable with the above monomer may be copolymerized as needed. Examples of the copolymerizable monomer include, but are not necessarily limited to, olefins such as ethylene, propylene, 1-butene, and isobutene; unsaturated acids such as acrylic acid, methacrylic acid, crotonic acid, phthalic acid, maleic acid, and itaconic acid, and salts thereof; acrylamides such as acrylamide, N-alkylacrylamides having 1 to 18 carbon atoms, N,N-dialkylacrylamides, diacetone acrylamide, 2-acrylamide propanesulfonic acid and salts thereof, and acrylamide propyldimethylamine, salts thereof, and quaternary salts thereof; methacrylamides such as methacrylamide, N-alkylmethacrylamides having 1 to 18 carbon atoms, N,N-dialkylmethacrylamides, diacetone methacrylamide, 2-methacrylamide propanesulfonic acid and salts thereof, 3,4-diacetoxy-1-butene, glycerol monoallyl ether, and methacrylamide propyldimethylamine, salts thereof, and quaternary salts thereof; vinyl ethers such as alkyl vinyl ethers having an alkyl chain with 1 to 18 carbon atoms, hydroxyalkyl vinyl ethers, and alkoxyalkyl vinyl ethers; N-vinylamides such as N-vinylpyrrolidone, N-vinylformamide, and N-vinylacetamide; vinyl cyanides such as acrylonitrile and methacrylonitrile; halogenated vinyls such as vinyl chloride, vinylidene chloride, vinyl fluoride, vinylidene fluoride, vinyl bromide, and vinylidene bromide; vinylsilanes such as trimethoxyvinylsilane; allyl compounds such as allyl acetate, allyl chloride, allyl alcohol, and dimethylallyl alcohol; vinylsilyl compounds such as vinyltrimethoxysilane; and isopropenyl acetate.

The amount of these additional copolymerizable monomers is not limited to particular values and is preferably not less than 0.001% by mole and less than 20% by mole relative to the total amount of the monomers.

The polymerization method of these monomers is not specifically limited, and a known radical polymerization method may be used. Typically, a polymer may be produced by a solution polymerization using an alcohol such as methanol, ethanol, and isopropyl alcohol as the solvent and may also be produced by bulk polymerization, emulsion polymerization, suspension polymerization, or the like. When bulk polymerization or solution polymerization is performed, continuous polymerization or batch polymerization may be adopted. A monomer may be added at once or may be added in portions. A monomer may be added continuously or intermittently.

The polymerization initiator used in radical polymerization is not specifically limited and may be a known radical polymerization initiator including azo compounds such as azobisisobutyronitrile, azobis-2,4-dimethylvaleronitrile, and azobis(4-methoxy-2,4-dimethylvaleronitrile); peroxides such as acetyl peroxide, benzoyl peroxide, lauroyl peroxide, acetylcyclohexylsulfonyl peroxide, 2,4,4-trimethylpentyl-2-peroxyphenoxy acetate; percarbonate compounds such as diisopropyl peroxydicarbonate, di-2-ethylhexyl peroxydicarbonate, and diethoxyethyl peroxydicarbonate; perester compounds such as t-butyl peroxyneodecanate, $\alpha$-cumyl peroxyneodecanate, and t-butyl peroxyneodecanate; and azobisdimethylvaleronitrile and azobismethoxyvaleronitrile. The polymerization reaction temperature is not limited to particular values and is typically set in a range of about 30 to 90°C.

The saponification condition for the production of the polyvinyl alcohol is not specifically limited, and a polymer prepared by the above method may be saponified by a known method. Typically, saponification may be performed by hydrolysis of intramolecular ester moieties in the presence of an alkali catalyst or an acid catalyst. For the saponification, the concentration of the copolymer in an alcohol as the polymerization solvent is not specifically limited and is preferably 10 to 80% by mass.

The alkali catalyst used for the saponification may be, for example, a hydroxide or alcoholate of an alkali metal, such as sodium hydroxide, potassium hydroxide, sodium methylate, sodium ethylate, and potassium methylate. The acid catalyst used may be, for example, an aqueous solution of an inorganic acid such as hydrochloric acid and sulfuric acid or an organic acid such as p-toluenesulfonic acid, and sodium hydroxide is particularly preferably used.

The saponification temperature is not limited to particular values and is preferably in a range of 10 to 70°C. The reaction time is not limited to particular values, and the reaction is preferably performed for 30 minutes to 3 hours.

(3) Additional components

The chloroprene latex of the embodiment may comprise, in addition to the above components, a tackifier resin, a pH adjuster, a metal oxide, a plasticizer, an age inhibitor, a thickener, a reducing agent, a defoaming agent, and a filler, and such an additional component may be added to the chloroprene latex after polymerization.

The chloroprene latex of the embodiment may have any viscosity, and the viscosity determined with a Brookfield viscometer manufactured by Brookfield, at 6 rpm and 25°C is preferably 20 to 640,000 mPa·s. When the viscosity of the chloroprene latex is adjusted within the range, a resulting cured product is allowed to have sufficient bond strength to concrete, and sufficient workability during formulation/application is achieved. The viscosity of the chloroprene latex may be appropriately adjusted by the above surfactant, filler, or the like.

As described above in detail, the chloroprene latex of the embodiment comprises a particular amount of a surfactant, thus the stability of the latex does not deteriorate, and the latex is capable of being stably subjected to curing. The cured product exhibits satisfactory bond strength to a hard adherend such as concrete and mortar. When the surfactant component in the chloroprene latex of the embodiment comprises a nonionic emulsifier at a particular concentration or comprises a particular polyvinyl alcohol as the nonionic emulsifier, the above effects are capable of being further improved.

2. Adhesive composition and cured product thereof (second embodiment)

Next, an adhesive composition and a cured product thereof pertaining to a second embodiment of the present invention will be described. The adhesive composition of the embodiment comprises a mixed latex composition containing the above chloroprene latex in the first embodiment and an isocyanate compound, and the cured product is prepared by applying/injecting and curing the mixed latex composition.

In the description, the amount of the isocyanate compound is not limited, and is preferably 10 to 200 parts by mass relative to 100 parts by mass of the chloroprene latex. When the amount of the isocyanate compound is 10 parts by mass or more, the curing of the mixed latex composition comprising the isocyanate compound proceeds smoothly after application/injection and curing. When the amount is 200 parts by mass or less, aggregates are prevented from generating on mixing with the isocyanate compound, and a uniform cured product is prepared. The resulting cured product exhibits higher bond strength to a hard adherend such as concrete and mortar.

The isocyanate compound in the embodiment is not specifically limited, and examples include diisocyanate compounds, polyisocyanate compounds other than the diisocyanate compounds, and other aqueous curable polyurethane resins. Examples of the diisocyanate compound, the polyisocyanate compound, and the aqueous curable polyurethane resin include diisocyanate compounds such as phenylene diisocyanate, tolylene diisocyanate, xylylene diisocyanate, tetramethylxylylene diisocyanate, 4,4'-biphenyl diisocyanate, 3,3'-dimethyl-4,4'-biphenyl diisocyanate, 4,4'-diphenylmethane diisocyanate, 3,3'-dimethyl-4,4'-diphenylmethane diisocyanate, triphenylmethane diisocyanate, naphthalene diisocyanate, isophorone diisocyanate, cyclohexylene diisocyanate, hydrogenated tolylene diisocyanate, hydrogenated xylylene diisocyanate, dicyclohexylmethane diisocyanate, and hexamethylene diisocyanate; triisocyanate compounds such as biphenyl triisocyanate, diphenylmethane triisocyanate, triphenylmethane triisocyanate, and naphthalene triisocyanate; and polymers of them. The isocyanate compound in the embodiment may be used in a prepolymer form having a reactive isocyanate group at an end, prepared by reaction of the above diisocyanate compound, the polyisocyanate compound other than the diisocyanate compound, or the aqueous curable polyurethane resin with a polyamine compound, a polyhydric alcohol, a polyol compound, or the like. Examples of the polyamine compound include ethylenediamine, diethylenetriamine, triethylenetetramine, tetraethylenehexamine, pentaethylenehexamine, cyclohexylenediamines, dicyclohexylmethanediamines, isophoronediamines, phenylenediamines, tolylenediamines, xylylenediamines, diphenylmethanediamines, triphenylmethanepolyamines, piperazine, and aminoethylpiperazine. Examples of the polyhydric alcohol include ethylene glycol, propylene glycol, 1,4-butanediol, neopentyl glycol, hexamethylene glycol, diethylene glycol, triethylene glycol, glycerol, hexanetriol, trimethylolpropane, pentaerythritol, and sorbitol. Examples of the polyol compound include polyether polyol compounds prepared by addition polymerization of the polyhydric alcohol with an alkylene oxide such as ethylene oxide and propylene oxide; polyester polyol compounds prepared by condensation reaction of the polyhydric alcohol with a polybasic acid such as maleic acid, succinic acid, adipic acid, sebacic acid, tartaric acid, terephthalic acid, and isophthalic acid; polyester polyol compounds prepared by ring-opening polymerization of a lactone such as ε-caprolactone and γ-valerolactone; epoxy polyol compounds prepared by reaction of an epoxy resin having an epoxy group at each end with an alkanolamine such as monoethanolamine and diethanolamine; homopolymers of a hydroxy group-containing polymerizable monomer such as 2-hydroxyethyl (meth)acrylate, 3-hydroxypropyl (meth)acrylate, 4-hydroxybutyl (meth)acrylate, and trimethylolpropane (meth)acrylic acid monoester and copolymers thereof; copolymers of the above hydroxy group-containing polymerizable monomer with an additional copolymerizable monomer such as (meth)acrylic acid, methyl (meth)acrylate, ethyl (meth)acrylate, (meth)acrylonitrile, styrene, and α-methylstyrene; and castor oil or derivatives thereof.

The cured product of the embodiment comprises the above chloroprene latex in the first embodiment and thus has satisfactory bond strength to a hard adherend such as concrete and mortar. More specifically, the cured product exhibits satisfactory bond strength to a hard adherend such as concrete, mortar, wood, glass, ceramic, metals including iron, zinc, and copper, and plastics including polypropylene and polyethylene. In particular, sufficient bond strength is achieved even to an adherend in wet conditions, as described later in examples. Hence, the cured product is also usable for repairing/reinforcing in civil engineering and construction for the purpose of filling into cavities in the ground, a surface covering material on concrete or mortar, application to cracks and back faces, a water cutoff material, a waterproofing material, a falling prevention material, a filler for masonry joints and joints, a vibration absorber, and the like.

3. Repairing/reinforcing method for civil engineering and construction

The above mixed latex composition has high bond strength and flame retardancy and thus is usable in a repairing/reinforcing method for civil engineering and construction. Examples of the repairing/reinforcing method for civil engineering and construction include a water cutoff method, a falling prevention method, a surface covering method, a section repairing method, a surface impregnation method, a prepacked method, a crack injection method, an RC lining method, a steel plate lining method, a carbon fiber reinforcing method, an on-site carbon fiber sheet bonding method, an aramid fiber sheet bonding method, a water conveyance method, a steel plate bonding method, a stringer extension method, a back-filling method, an embedded joint method, porous concrete pavement, and concrete pavement for early traffic opening.

The mixed latex composition is preferred for the water cutoff method of the above repairing/reinforcing method for civil engineering and construction. The water cutoff method is a method of cutting off water leakage from cracks or gaps of pipes for agricultural waterways, corrugated pipes, concrete structures, and the like. Examples include a back side injection water cutoff method of cutting off water by curing a water cutoff material between a back side of a concrete structure and covered soil in contact with the back side as disclosed in JP-A No. 2014-208970 and a high-pressure injection water cutoff method of pressure-injecting a water cutoff material into water leakage cracks in a concrete structure as disclosed in JP-A No. 2004-251007. The water cutoff method using the adhesive composition pertaining to the second embodiment is not specifically limited, but the adhesive composition is usable as the water cutoff material in these water cutoff methods.

The mixed latex composition is also preferred for the falling prevention method of the repairing/reinforcing method for civil engineering and construction. The falling prevention method is a method of preventing concrete masses from falling due to defects such as cracks generated during the construction of a concrete structure, damages such as cracks and separation by earthquakes, collisions, and the like, and deterioration derived from neutralization, salt damage, alkali-aggregate reaction, and the like. Examples include a method of applying a single layer of a resin composition onto a concrete surface as disclosed in JP-A No. 2014-77287 and a method of preparing a laminate with a single primer or two primers as disclosed in JP-A No. 2004-18719 and JP-A No. 2011-52457. The falling prevention method of the mixed latex composition is not specifically limited, but the mixed latex composition is usable as the falling prevention material in these falling prevention methods.

In the falling prevention method using the mixed latex composition, short fibers, a mesh sheet, or a primer may be used in combination as needed.

The mixed latex composition is preferred for the surface covering method of the above repairing/reinforcing method for civil engineering and construction. The surface covering method is a coating method for protecting steel in concrete against corrosion from the outside or for protecting concrete, and examples include a method of applying a polymer cement mortar as a surface covering material as disclosed in JP-A No. 2012-207449. The surface covering method of the mixed latex composition is not specifically limited, but the mixed latex composition is usable as the surface covering material in such a surface covering method. The adhesive composition may be used as a single layer or in a method of preparing a laminate in combination with other materials.

The repairing/reinforcing method for civil engineering and construction of the embodiment is a method at least comprising a step of applying, injecting, or spraying the above mixed latex composition (in)to an adherend and a step of curing the mixed latex composition. As long as the advantageous effects of the invention are not impaired, various known steps specific for each method may be freely selected and performed in addition to the above steps.

The method of applying or injecting the mixed latex composition (in)to an adherend is not specifically limited as long as the advantageous effects of the invention are not impaired, and a known method may be freely adopted. Examples include an application method with a brush and an injection method with a caulking gun.

The method of curing the mixed latex composition is also not specifically limited as long as the advantageous effects of the invention are not impaired, and a known method may be freely adopted. The mixed latex composition is, for example, applied or injected (in)to an adherend and then is subjected to molding or construction, and is allowed to stand for a certain period of time, thereby being cured.

Examples

The present invention will next be described more specifically with reference to examples. The examples described below are merely examples of representative examples of the present invention and are not intended to limit the scope of the invention.

<Production of chloroprene latexes A to L>

In a reaction vessel having an internal volume of 3 liters under a nitrogen stream, 100 parts by mass of water, surfactant (1), 0.1 part by mass of sodium sulfite were placed, and the whole was dissolved. To the solution under stirring, 100 parts by mass of chloroprene and 0.3 part by mass of n-octyl mercaptan were added. Potassium persulfate was used as the initiator, and the mixture was polymerized at 40°C. When the polymerization degree reached 100%, a phenothiazine emulsion was added to stop the polymerization. After the stop of the polymerization, surfactant (2) was added to give a chloroprene latex. The types and the pure contents of the added surfactants (1) and (2) are shown in Table 1 and Table 2.

[Table 1]

| Chloroprene polymer latex | A | | B | | C | | D | | E | | F | |
|---|---|---|---|---|---|---|---|---|---|---|---|---|
| Chloroprene polymer [parts by mass] | 100 | | 100 | | 100 | | 100 | | 100 | | 100 | |
| Surfactant [parts by mass] | (1) | (2) | (1) | (2) | (1) | (2) | (1) | (2) | (1) | (2) | (1) | (2) |
| Disproportionated potassium rosinate | | | | | 10 | 30 | 5 | 25 | | | | |
| Sodium $\beta$-naphthalenesulfonate-formalin condensate | | | | | | | | 1 | | | | |
| (Nonionic emulsifiers) | | | | | | | | | | | | |
| Polyoxyethylene styrenated phenyl ether | | | 1.5 | | | | | | | | | |
| Polyoxyethylene alkylene alkyl ether | | | | | | | | | | 1.5 | | |
| Polyvinyl alcohol A (a saponification degree of 78.5% by mole) | 3 | | 3 | 75.5 | | | | 4 | | | 15 | 80 |
| Polyvinyl alcohol B (a saponification degree of 80.0% by mole) | | 60 | 5 | 15 | | 10 | | | 5 | 14 | | |
| Polyvinyl alcohol C (a saponification degree of 96.5% by mole) | | | | | | | | | | | | |
| Polyvinyl alcohol D (a saponification degree of 70.0% by mole) | | | | | | | | | | | | |
| Polyvinyl alcohol E (a saponification degree of 98.0% by mole) | | | | | | | | | | | | |
| Polyvinyl alcohol F (a saponification degree of 42.0% by mole) | | | | | | | | | | | | |
| Polyvinyl alcohol G (a saponification degree of 89.0% by mole) | | | | | | | | | | | | |
| (Total content of nonionic emulsifiers [parts by mass]) | 63.0 | | 100.0 | | 10.0 | | 4.0 | | 20.5 | | 95.0 | |
| Total content of surfactants [parts by mass] | 63.0 | | 100.0 | | 50.0 | | 35.0 | | 20.5 | | 95.0 | |

(continued)

| (Nonionic emulsifiers) | | | | | | |
|---|---|---|---|---|---|---|
| Nonionic emulsifier concentration [% by mass] | 100.0 | 100.0 | 20.0 | 11.4 | 100.0 | 100.0 |
| Chloroprene latex viscosity (6 rpm, 25°C) [mPa·s] | 26700 | 22400 | 18400 | 50 | 22000 | 60 |

[Table 2]

| Chloroprene polymer latex | G | | H | | I | | J | | K | | L | |
|---|---|---|---|---|---|---|---|---|---|---|---|---|
| Chloroprene polymer [parts by mass] | 100 | | 100 | | 100 | | 100 | | 100 | | 100 | |
| Surfactant [parts by mass] | (1) | (2) | (1) | (2) | (1) | (2) | (1) | (2) | (1) | (2) | (1) | (2) |
| Disproportionated potassium rosinate | | | | | | | | | 4 | | 3 | |
| Sodium $\beta$-naphthalenesulfonate-formalin condensate | | | | | | | | | 0.5 | | | |
| (Nonionic emulsifiers) | | | | | | | | | | | | |
| Polyoxyethylene styrenated phenyl ether | | | | | | | | | | | | |
| Polyoxyethylene alkylene alkyl ether | | | | | | | | | | | | |
| Polyvinyl alcohol A (a saponification degree of 78.5% by mole) | 2 | | 2 | | 3 | | | | | 2 | 10 | 70 |
| Polyvinyl alcohol B (a saponification degree of 80.0% by mole) | | | | | | | | | | | 10 | 40 |
| Polyvinyl alcohol C (a saponification degree of 96.5% by mole) | 1 | 29 | | | | | | | | | | |
| Polyvinyl alcohol D (a saponification degree of 70.0% by mole) | | | 1 | 29 | | | | | | | | |
| Polyvinyl alcohol E (a saponification degree of 98.0% by mole) | | | | | | | 5 | 5 | | | | |
| Polyvinyl alcohol F (a saponification degree of 42.0% by mole) | | | | | | | 5 | 25 | | | | |
| Polyvinyl alcohol G (a saponification degree of 89.0% by mole) | | | | | | 60 | | | | | | |
| (Total content of nonionic emulsifiers [parts by mass]) | 32.0 | | 32.0 | | 63.0 | | 40.0 | | 2.0 | | 130.0 | |
| Total content of surfactants [parts by mass] | 32.0 | | 32.0 | | 63.0 | | 40.0 | | 6.5 | | 133.0 | |

(continued)

| Chloroprene polymer latex | G | H | I | J | K | L |
|---|---|---|---|---|---|---|
| Nonionic emulsifier concentration [% by mass] | 100.0 | 100.0 | 100.0 | 100.0 | 30.8 | 97.7 |
| Chloroprene latex viscosity (6 rpm, 25°C) [mPa·s] | 8210 | 10030 | 90310 | 8320 | 50 | 252000 |

The types of the surfactants shown in Table 1 and Table 2 are as follows:

- Disproportionated potassium rosinate: RONDIS K-25 (Arakawa Chemical Industries, Ltd.)
- Sodium β-naphthalenesulfonate-formalin condensate: DEMOL N (Kao Corporation)
- Polyoxyethylene styrenated phenyl ether: NOIGEN EA-177 (Dai-ichi Kogyo Seiyaku Co., Ltd.)
- Polyoxyethylene alkylene alkyl ether: EMULGEN LS-114 (Kao Corporation)
- Polyvinyl alcohol A: KURARAY POVAL PVA-403, a saponification degree of 78.5% by mole, a polymerization degree of 300 (Kuraray Co., Ltd.)
- Polyvinyl alcohol B: DENKA POVAL W24, a saponification degree of 80.0% by mole, a polymerization degree of 2,400 (Denka Co. Ltd.)
- Polyvinyl alcohol C: KURARAY POVAL PVA-CST, a saponification degree of 96.5% by mole, a polymerization degree of 1,600 (Kuraray Co., Ltd.)
- Polyvinyl alcohol D: DENKA POVAL MP10, a saponification degree of 70.0% by mole, a polymerization degree of 1,200 (Denka Co. Ltd.)
- Polyvinyl alcohol E: KURARAY POVAL PVA-103, a saponification degree of 98.0% by mole, a polymerization degree of 300 (Kuraray Co., Ltd.)
- Polyvinyl alcohol F: KURARAY POVAL LM-10HD, a saponification degree of 42.0% by mole, a polymerization degree of 500 (Kuraray Co., Ltd.)
- Polyvinyl alcohol G: KURARAY POVAL PVA-235, a saponification degree of 89.0% by mole, a polymerization degree of 3,500 (Kuraray Co., Ltd.)

The nonionic emulsifier concentrations shown in Table 1 and Table 2 are calculated in accordance with the following equation.

$$(\text{Nonionic emulsifier concentration}) = (\text{total content of nonionic emulsifiers})/(\text{total content of surfactants}) \times 100$$

The chloroprene latex viscosities shown in Table 1 and Table 2 are determined with a Brookfield viscometer (manufactured by Brookfield) at 25°C and 6 rpm.

<Examples 1 to 15>

The chloroprene latexes in Table 1 and Table 2 were used to prepare mixed latex compositions and cured products, and the following evaluations were performed.

[Shear bond strength test (1) (dry face)]

With 100 parts by mass of a chloroprene latex, a curing agent was mixed in accordance with the type and amount in Table 3 and Table 4 to give a mixed latex composition, and the composition was applied to a mortar test piece at 150 g/m² using a brush. The test piece was immediately bonded to a mortar test piece without the composition to give a cured product as a bonding layer. The bonded mortar test pieces were allowed to stand for a set time of 7 days, and then the shear bond strength was determined by using a tensile tester at a temperature of 23°C, a humidity of 50% RH, and a tension speed of 2.5 mm/min. The test results are shown in Table 3 and Table 4. A sample having a bond strength of 0.05 N/mm² or more is evaluated as good.

[Shear bond strength test (2) (dry face/initial bonding)]

With 100 parts by mass of a chloroprene latex, a curing agent was mixed in accordance with the type and amount in Table 3 and Table 4 to give a mixed latex composition, and the composition was applied to a mortar test piece at 150 g/m$^2$ using a brush. The test piece was immediately bonded to a mortar test piece without the composition to give a cured product as a bonding layer. The bonded mortar test pieces were allowed to stand for a set time of 10 minutes, and then the shear bond strength was determined by using a tensile tester at a temperature of 23°C, a humidity of 50% RH, and a tension speed of 2.5 mm/min. The test results are shown in Table 3 and Table 4. A sample having a bond strength of 0.03 N/mm$^2$ or more is evaluated as good.

[Shear bond strength test (3) (wet)]

With 100 parts by mass of a chloroprene latex, a curing agent was mixed in accordance with the type and amount in Table 3 and Table 4 to give a mixed latex composition, and the composition was applied to a mortar test piece that had been immersed in water for 2 hours, at 150 g/m$^2$ using a brush. The test piece was immediately bonded to a mortar test piece without the composition to give a cured product as a bonding layer. The bonded mortar test pieces were allowed to stand for a set time of 7 days, and then the shear bond strength was determine by using a tensile tester at a temperature of 23°C, a humidity of 50% RH, and a tension speed of 2.5 mm/min. The test results are shown in Table 3 and Table 4. A sample having a bond strength of 0.05 N/mm$^2$ or more is evaluated as good.

[Table 3]

| | Example | | | | | | | | |
|---|---|---|---|---|---|---|---|---|---|
| | 1 | 2 | 3 | 4 | 5 | 6 | 7 | 8 | 9 |
| Chloroprene polymer latex (parts by mass) | 100 | 100 | 100 | 100 | 100 | 100 | 100 | 100 | 100 |
| (Chloroprene polymer latex type) | A | A | A | A | A | A | B | C | D |
| Curing agent (parts by mass) | | | | | | | | | |
| Urethane curing agent | 50 | 200 | - | 10 | 300 | 5 | 50 | 50 | 50 |
| Diphenylmethane diisocyanate | - | - | 50 | - | - | - | - | - | - |
| Bond strength [N/mm2] | | | | | | | | | |
| Shear bond strength (1) (dry face) | 0.22 | 0.18 | 0.20 | 0.17 | 0.07 | 0.08 | 0.16 | 0.19 | 0.14 |
| Shear bond strength (2) (dry face, initial bonding) | 0.10 | 0.09 | 0.10 | 0.09 | 0.04 | 0.04 | 0.08 | 0.08 | 0.07 |
| Shear bond strength (3) (wet face) | 0.19 | 0.17 | 0.19 | 0.15 | 0.06 | 0.07 | 0.15 | 0.18 | 0.13 |

[Table 4]

| | Example | | | | | | Comparative Example | | |
|---|---|---|---|---|---|---|---|---|---|
| | 10 | 11 | 12 | 13 | 14 | 15 | 1 | 2 | 3 |
| Chloroprene polymer latex (parts by mass) | 100 | 100 | 100 | 100 | 100 | 100 | 100 | 100 | 100 |
| (Chloroprene polymer latex type) | E | F | G | H | I | J | K | K | L |
| Curing agent (parts by mass) | | | | | | | | | |
| Urethane curing agent | 50 | 300 | 50 | 100 | 50 | 50 | 10 | 5 | - |
| Diphenylmethane diisocyanate | - | - | - | - | - | - | - | - | - |
| Bond strength [N/mm2] | | | | | | | | | |
| Shear bond strength (1) (dry face) | 0.14 | 0.14 | 0.24 | 0.21 | 0.20 | 0.13 | - | 0.01 | - |
| Shear bond strength (2) (dry face, initial bonding) | 0.08 | 0.06 | 0.11 | 0.10 | 0.11 | 0.04 | - | - | - |
| Shear bond strength (3) (wet face) | 0.12 | 0.11 | 0.18 | 0.19 | 0.19 | 0.11 | - | - | - |

The types of the curing agents shown in Table 3 and Table 4 are as follows:

- Urethane curing agent: HYCEL OH-822N (Toho Chemical Industry Co., Ltd.)

- Diphenylmethane diisocyanate: Millionate MT (Tosoh Corporation)

<Comparative Examples 1 and 2>

With 100 parts by mass of the chloroprene latex K containing 100 parts by mass of the chloroprene polymer and less than 20.5 parts by mass of the surfactant component, a curing agent was mixed in accordance with the type and amount in Table 4. Comparative Example 1 generated aggregates immediately after mixing, and the shear bond strength test was failed to be determined. Comparative Example 2 had a low bond strength.

<Comparative Example 3>

In Comparative Example 3, the chloroprene latex L containing 100 parts by mass of the chloroprene polymer and more than 100 parts by mass of the surfactant component was used, but bubbles were vigorously formed when a curing agent was mixed, and the mixing was not completed.

<Examples 1 to 15>

Tables 3 and 4 reveal that Examples 1 to 15 using the chloroprene latexes A to J each comprising 15 to 100 parts by mass of the surfactant component relative to 100 parts by mass of the chloroprene polymer exhibited satisfactory bond strength to mortar test pieces.

Comparison of Examples demonstrates that Examples 1 and 12 using the chloroprene latex A or G comprising 25 to 95 parts by mass of the surfactant component relative to 100 parts by mass of the chloroprene polymer had better results in all the shear bond strength test (1) (dry face), the shear bond strength test (2) (dry face, initial bonding), and the shear bond strength test (3) (wet) than Example 7 using the chloroprene latex B comprising more than 95 parts by mass of the surfactant component relative to 100 parts by mass of the chloroprene polymer and Example 10 using the chloroprene latex E comprising less than 25 parts by mass of the surfactant component. The result reveals that the content of the surfactant component is preferably 25 to 95 parts by mass relative to 100 parts by mass of the chloroprene polymer.

It is also demonstrated that Example 8 using the chloroprene latex C in which the surfactant component comprised the nonionic emulsifier at a concentration of 20% by mass or more in terms of solid content had better results in all the shear bond strength test (1) (dry face), the shear bond strength test (2) (dry face, initial bonding), and the shear bond strength test (3) (wet) than Example 9 using the chloroprene latex D in which the surfactant component comprised the nonionic emulsifier at a concentration of less than 20% by mass in terms of solid content. The result reveals that the surfactant preferably contains the nonionic emulsifier at a concentration of 20 to 100% by mass in terms of solid content.

It is further demonstrated that Examples 1, 8 and 12 using the chloroprene latex A, C, or G comprising, as the nonionic emulsifier, a polyvinyl alcohol having a saponification degree of 70.0 to 96.5% by mole had better results in all the shear bond strength test (1) (dry face), the shear bond strength test (2) (dry face, initial bonding), and the shear bond strength test (3) (wet) than Example 15 using the chloroprene latex J comprising a polyvinyl alcohol having a saponification degree of more than 96.5% by mole and a polyvinyl alcohol having a saponification degree of less than 70.0% by mole. The result reveals that a polyvinyl alcohol having a saponification degree of 70.0 to 96.5% by mole is preferably used as the nonionic emulsifier.

It is also demonstrated that Examples 1 to 4 comprising 10 to 200 parts by mass of the curing agent relative to 100 parts by mass of the chloroprene polymer latex had better results in all the shear bond strength test (1) (dry face), the shear bond strength test (2) (dry face, initial bonding), and the shear bond strength test (3) (wet) than Example 5 and Example 11 comprising more than 200 parts by mass of the curing agent and Example 6 comprising less than 10 parts by mass of the curing agent. The result reveals that the amount of the curing agent is preferably 10 to 200 parts by mass relative to 100 parts by mass of the chloroprene polymer latex composition.

**Claims**

1. A chloroprene polymer latex composition comprising:
   20.5 to 100 parts by mass of a surfactant component in terms of solid content, relative to 100 parts by mass of a chloroprene polymer.

**2.** The chloroprene polymer latex composition according to claim 1, wherein the surfactant component comprises a nonionic emulsifier at a concentration of 20 to 100% by mass in terms of solid content.

**3.** The chloroprene polymer latex composition according to claim 2, wherein the nonionic emulsifier is a polyvinyl alcohol having a saponification degree of 70.0 to 96.5% by mole.

**4.** A mixed latex composition comprising:
10 to 200 parts by mass of a curing agent composition having an isocyanate group as a functional group, relative to 100 parts by mass of the chloroprene polymer latex composition according to any one of claims 1 to 3.

**5.** An adhesive composition comprising:
the mixed latex composition according to claim 4.

**6.** A cured product of the mixed latex composition according to claim 4.

**7.** A repairing/reinforcing material for civil engineering and construction, the material comprising:
the mixed latex composition according to claim 4.

**8.** A water cutoff material comprising:
the mixed latex composition according to claim 4.

**9.** A falling prevention material comprising:
the mixed latex composition according to claim 4.

**10.** A surface covering material comprising:
the mixed latex composition according to claim 4.

**11.** A repairing/reinforcing method for civil engineering and construction, the method comprising:

a step of applying, injecting, or spraying the mixed latex composition according to claim 4 (in)to an adherend; and
a step of curing the mixed latex composition.

**12.** A water cutoff method comprising:

a step of applying, injecting, or spraying the mixed latex composition according to claim 4 (in)to an adherend; and
a step of curing the mixed latex composition.

**13.** A falling prevention method comprising:

a step of applying, injecting, or spraying the mixed latex composition according to claim 4 (in)to an adherend; and
a step of curing the mixed latex composition.

**14.** A surface covering method comprising:

a step of applying, injecting, or spraying the mixed latex composition according to claim 4 (in)to an adherend; and
a step of curing the mixed latex composition.

## INTERNATIONAL SEARCH REPORT

| International application No. |
|---|
| PCT/JP2018/002870 |

A. CLASSIFICATION OF SUBJECT MATTER
Int.Cl.    C08L11/02(2006.01)i, C08K5/16(2006.01)i , C08L29/04(2006.01)i,
          C09J11/08(2006.01)i, C09J111/02(2006.01)i, C09J129/04(2006.01)i,
          C09J175/04(2006.01)i
According to International Patent Classification (IPC) or to both national classification and IPC

B. FIELDS SEARCHED

Minimum documentation searched (classification system followed by classification symbols)
Int.Cl.    C08L11/02, C08K5/16, C08L29/04, C09J11/08, C09J111/02, C09J129/04,
          C09J175/04

Documentation searched other than minimum documentation to the extent that such documents are included in the fields searched
    Published examined utility model applications of Japan        1922–1996
    Published unexamined utility model applications of Japan     1971–2018
    Registered utility model specifications of Japan          1996–2018
    Published registered utility model applications of Japan    1994–2018

Electronic data base consulted during the international search (name of data base and, where practicable, search terms used)
    CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| X | WO 2015/194612 A1 (SUMITOMO CHEMICAL CO., LTD.) 23 December 2015, claims, paragraphs [0008]–[0024], [0047]–[0056], [0058]–[0080], [0138]–[0144], [0186]–[0188], [0213], [0220]–[0233], [0245]–[0270] & CN 106459595 A & KR 10-2017-0028310 A | 1-14 |
| A | JP 2008-222736 A (TOSOH CORP.) 25 September 2008, entire text (Family: none) | 1-14 |
| A | JP 2004-197031 A (HAYAKAWA RUBBER CO., LTD.) 15 July 2004, entire text (Family: none) | 1-14 |
| A | CN 105131837 A (BEIJING ORIENTAL YUHONG WATERPROOF TECHNOLOGY CO., LTD.) 09 December 2015, entire text (Family: none) | 1-14 |
| A | JP 10-53749 A (AICA KOGYO CO., LTD.) 24 February 1998, entire text (Family: none) | 1-14 |

☐ Further documents are listed in the continuation of Box C.    ☐ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 March 2018 (08.03.2018) | 20 March 2018 (20.03.2018) |

| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 56059874 A
- JP H09188860 A
- JP 2014208970 A
- JP 2004251007 A
- JP 2014077287 A
- JP 2004018719 A
- JP 2011052457 A
- JP 2012207449 A